# EUROPÄISCHE PATENTANMELDUNG

(11) **EP 1 655 566 A2**
(43) Veröffentlichungstag der Anmeldung: **10.05.2006**
(21) Anmeldenummer: 05024068.8
(22) Anmeldetag: 04.11.2005
(51) Int. Cl.: F28F 21/00, F24J 3/08, F28D 20/00

(54) **Flexible mehrlagiges Verbundmaterial**

(30) Priorität: 05.11.2004 AT 18532004
(71) Anmelder: Polyfelt Gesellschaft m.b.H., 4021 Linz (AT)
(72) Erfinder: Ostermann, Norbert, Univ.-Prof., 1140 Wien (AT); Adam, Dietmar, Dr., 2340 Mödling (AT); Kopf, Fritz, Dr., 1140 Wien (AT); Markiewicz, Roman, Dipl.-Ing., 1230 Wien (AT)
(74) Vertreter: Landgraf, Elvira

(57) **Zusammenfassung**

Flexibles mehrlagiges Verbundmaterial, dadurch gekennzeichnet, dass es aus mindestens einer flexiblen Trägerlage (1) besteht, auf der ein Rohr- oder Schlauchsystem aus flexiblen Rohren oder Schläuchen (2) befestigt ist.

## Beschreibung

Die Erfindung betrifft ein System zur Nutzung von Umgebungs- und Erdwärme bzw. -kälte und zur Wärme- bzw. Kältespeicherung im umgebenden Medium.

Aus dem Stand der Technik sind bereits mehrere Systeme zur Erdwärmenutzung bzw. Wärmespeicherung bekannt.

Aus der AT 391 506 B ist eine Vorrichtung zur Abführung von Wärme in den Erdboden bzw. zur Aufnahme der Wärme aus dem Erdboden bekannt, wobei ein Rammpfahl als Wärmeträger, Wärmespeicher und/oder Wärmesonde ausgebildet ist.

Aus der DE 39 13 429 A1 ist ein Erdkollektor zur Wärmegewinnung und zur Wärmespeicherung im Erdreich bekannt, wobei ein Absorberkreis, der von Rohren oder Schläuchen oder dergleichen gebildet wird, in ein brunnenartig ausgehobenes Erdloch eingesetzt wird.

Aus der DE 36 00 230 A1 ist eine Wärmegewinnungsanlage zur Nutzbarmachung von Erdwärme z.B. zur Gebäudeheizung bekannt, wobei der Absorberkreis in den Fundamentkörper des Gebäudes eingebettet ist. Der Fundamentkörper besteht vorzugsweise aus einem transportablen Fertigbetonbauteil, die Einbettung des Rohrsystems erfolgt mit einem tragenden Gestell.

Bei allen diesen Systemen müssen die Absorberrohre an fixen Stellen befestigt werden um eine sichere Verankerung zur erreichen und ein Verrutschen der Rohre bzw. Schläuche zu verhindern. Eine direkte Verlegung der Absorberrohre im Erdreich ist dadurch hiebei nicht möglich. Daher werden die Absorberrohre bzw. ― schläuche bisher entweder in Betonfertigteile eingebracht bzw. an Ort und Stelle einzeln verlegt und fixiert.

Daher sind diese Systeme beispielsweise bei Tunnelbauten oder bei der Nutzung von Dämmen zur Energiebewirtschaftung (Heizung, Kühlen und Speichern) gar nicht oder nur bedingt geeignet.

Aufgabe der Erfindung war es ein flexibles Absorbersystem zu schaffen, das dazu geeignet ist, Flächen rasch und wirtschaftlich mit einem System aus Absorberrohren- bzw. Schläuchen zu belegen, wobei ein an unterschiedliche Boden- bzw. Bauwerksgeometrien bzw. -formationen anpassbares System bereitgestellt werden soll.

Gegenstand der Erfindung ist daher ein flexibles Absorbersystem, dadurch gekennzeichnet, dass es aus mindestens einer flexiblen Trägerlage (1) besteht, auf der ein Rohr- oder Schlauchsystem aus flexiblen Rohren oder Schläuchen (2) befestigt ist.

Als Trägerlage (1) kommt vorzugsweise ein Vlies, beispielsweise ein Geotextil, aus Endlos- oder Stapel-fasern aus Kunststoff, beispielsweise aus Polyolefinfasern, wie Polypropylen oder Polyethylen in Frage.

Ferner kann als Trägerlage auch eine Folie, beispielsweise eine Kunststofffolie aus Polyolefinen, beispielsweise Polyproyplen, oder Polyethylen, oder Polyvinylchlorid verwendet werden.

Ferner kann als Trägerlage auch ein Verbund aus einer Folie und einem Geotextil verwendet werden, wobei die Folie und das Geotextil auf bekannte Weise, beispielsweise durch Verkleben, durch Kaschieren und dergleichen miteinander verbunden sein können.

Geokunststoffe, beispielsweise Geotextilien, Folien, Kunststoffdichtungsbahnen und dergleichen sind bekannt und weisen Trenn-, Filter-, Schutz-, Drainage-, Abdicht- und Bewehrungsfunktionen auf.

Auf diese Trägerlage werden beispielsweise durch Kleben, durch thermisches Verschweißen oder durch mechanisches Befestigungsmöglichkeiten Abstandshalter (3) verlegt, in denen anschließend die flexiblen Rohre- bzw. Schläuche (2) fixiert werden.

Als Kleber kommen beispielsweise bekannte Kleber auf Polyolefinbasis in Frage.
Thermisches Verschweißen kann beispielsweise mit Hilfe von geeigneten Flächenflämmern erfolgen.
Ebenso sind mechanische Befestigungsmöglichkeiten, beispielsweise Kunststoffschrauben denkbar.

Die Abstandshalter bestehen vorzugsweise aus verrottungsfestem chemisch beständigem Kunststoff. Die Abstandshalter müssen ausreichend druckstabil sein. Die Abstandshalter weisen entsprechend dem Profil des in den Abstandshaltern zu befestigenden Rohres oder Schlauchs Einkerbungen zur Fixierung der Rohre bzw. Schläuche auf.

Die Abstandshalter sind so dimensioniert, dass die damit befestigten Rohre-Schläuche und dergleichen in den Abstandshaltern verrutschungs- und verwindungsfrei befestigt werden können.
Der Abstand zwischen den Rohren bzw. Schläuchen wird in Abhängigkeit vom zu erreichenden Wirkungsgrad dimensioniert und kann etwa 10 cm bis 2 m betragen.

Dabei kann die Anordnung der Rohre oder Schläuche in beliebiger Form, beispielsweise parallel, in bestimmten Winkeln oder Neigungen zueinander, in Wellen- oder Schlangenlinien, in Langs- oder Querrichtung und dergleichen erfolgen.

Dabei können alle bekannten Rohre bzw. Schläuche verwendet werden, die besonders bei den jeweiligen Einsatzbedingungen (Temperatur, Druck) stabil und verrottungsfest sind.

Die erfindungsgemäßen flexiblen Verbundmaterialien können beispielsweise zur Energiegewinnung (Heizen, Kühlen oder Speichern) im Tunnelbau, im Verkehrswegebau (Straßen-, Eisenbahnbau), im Damm- und Deichbau, im Hochbau und im Brunnenbau eingesetzt werden.

In einer besonders bevorzugten Ausführungsform wird das wie beschrieben aufgebaute flexible Verbundmaterial anschließend mit einer Schutzlage (4) aus einem Geotextil, einer Folie oder einem Verbund aus Folie und Geotextil, wobei diese Materialien gleich beschaffen sein können, wie die Trägerlage (1), abgedeckt.

Die Verbindung zwischen der Trägerlage (1) bzw. den Absorberrohren bzw. - schläuchen und der Abdeck- bzw. Schutzschicht kann auf bekannte Weise, beispielsweise je nach verwendeten Materialien durch Kleben, Kaschieren, Verschrauben und dergleichen erfolgen.

Dabei können analoge Verbindungsmethoden und Materialien verwendet werden, die auch bei der Verbindung der Abstandshalter mit der Trägerlage, bzw. bei der Verbindung eines Geotextils mit einer Folie als Trägerlage verwendet werden.

Die erfindungsgemäßen Verbundmaterialien können als fertige Bauteile in jeder gewünschten Dimension hergestellt werden. Diese Verbundmaterialien können im Anschluss an deren Herstellung aufgerollt als fertige Bauteile an den Einsatzort gebracht, und an Ort und Stelle fertig montiert werden.
Durch die flexible Gestaltung können diese Verbundmaterialien auch an jede vorliegende und erforderliche Oberflächengeometrie angepasst werden.

Ferner weist das erfindungsgemäße flexible Verbundmaterial eine vorzügliche Robustheit gegen die im Baustellbereich auftretenden Belastungen, beispielsweise den Verdichtungsdruck, oder den Betonierdruck und dergleichen auf.

Eine aufwändige Vorfertigung passgenauer Bauelemente bzw. eine aufwändige Verlegung des Absorberrohrsystems vor Ort kann daher vermeiden werden.

Durch die Verwendung von Geotextilien als flexibler Trägerschicht oder Abdeck- bzw. Schutzschicht werden neben den Vorteil, dass flexible fertige Bauteile für Systeme zur Nutzung bzw. Speicherung der Erdwärme bereitgestellt werden, die an die jeweiligen Oberflächen- bzw. Einbaugegebenheiten problemlos angepasst werden können, beim Einbau beispielsweise in Tunnelbauten, in Dämmen im Verkehrswegebau, bei Hochbau, beim Brunnenbau als zusätzlicher Vorteil auch die Eigenschaften des Geotextils, wie Bewehrung, Drainieren, Abdichten und dergleichen genützt.

So sind beispielsweise beim Tunnel- oder Dammbau je nach den geologischen und/oder geotechnischen Gegebenheiten keine zusätzlichen Einbauten zur Bewehrung Drainierung usw. notwendig, wodurch sowohl Arbeitszeit als auch Material- und Personalkosten eingespart werden.

Es ist auch möglich die erfindungsgemäßen flexibeln Verbundmaterialien in mehreren Ebenen einzubringen und so zusätzliche Vorteile bei der Energiegewinnung zu nutzen.

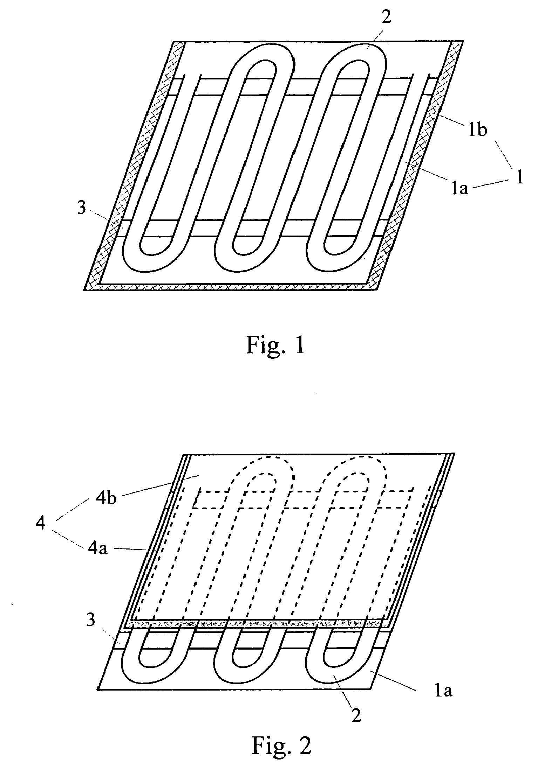

In den Fig. 1 - 2. sind erfindungsgemäße flexible Verbundmaterialien zur Nutzung bzw. Speicherung von Erdwärme dargestellt.

Darin bedeuten 1 die Trägerlage, 1 a das Geotextil, 1 b die Folie, 2 die Absorberrohre bzw. -schläuche, 3 die Abstandshalter, 4 die Abdeck- bzw. Schutzschicht, 4a das Geotextil der Abdeck- bzw. Schutzschicht, 4 b die Folie der Abdeck- bzw.- Schutzschicht.

## Patentansprüche

1. Flexibles mehrlagiges Verbundmaterial, **dadurch gekennzeichnet, dass** es aus mindestens einer flexiblen Trägerlage (1) besteht, auf der ein Rohr- oder Schlauchsystem aus flexiblen Rohren oder Schläuchen (2) befestigt ist.

2. Flexibles mehrlagiges Verbundmaterial nach Anspruch 1, **dadurch gekennzeichnet, dass** das Rohr- bzw. Schlauchsystem durch eine Abdeck- bzw. Schutzschicht (4) abgedeckt ist.

3. Flexibles mehrlagiges Verbundmaterial nach einem der Ansprüche 1 oder 2 **dadurch gekennzeichnet, dass** die Trägerlage aus einem Geotextil oder einer Folie oder einem Verbund aus einer Folie und einem Geotextil besteht.

4. Flexibles mehrlagiges Verbundmaterial nach einem der Ansprüche 1 bis 3 **dadurch gekennzeichnet, dass** die Abdeck- oder Schutzschicht aus einem Geotextil, einer Folie oder einem Verbund aus einem Geotextil und einer Folie besteht.

5. Flexibles mehrlagiges Verbundmaterial nach einem der Ansprüche 1 bis 4 **dadurch gekennzeichnet, dass** das Rohr- bzw. Schlauchsystem mittels Abstandshaltern (3) auf der flexiblen Trägerlage (1) befestigt ist.

6. Flexibles mehrlagiges Verbundmaterial nach einem der Ansprüche 1 bis 5 **dadurch gekennzeichnet, dass** die Trägerlage und/oder die Abdeckschicht aus einem Geotextil aus einem Vlies aus Polyolefinfasern besteht.

7. Flexibles mehrlagiges Verbundmaterial nach einem der Ansprüche 1 bis 6 **dadurch gekennzeichnet, dass** das das Rohr- bzw. Schlauchsystem mit Hilfe von mit der Trägerlage verbundenen Abstandshaltern fixiert wird.

8. Flexibles mehrlagiges Verbundmaterial nach einem der Ansprüche 1 bis 7, **dadurch gekennzeichnet, dass** die Abstandshalter durch Kleben, thermisches Verschweißen oder mechanische Befestigungselemente mit der Trägerlage verbunden sind.

9. Verwendung des flexiblen mehrlagigen Verbundmaterials nach einem der Ansprüche 1 bis 8 zur Energiebewirtschaftung im Tunnelbau, im Verkehrswegebau (Straßen-, Eisenbahnbau), im Damm- und Deichbau, im Hochbau und im Brunnenbau.
